# NEW EUROPEAN PATENT SPECIFICATION

(11) **EP 2 313 269 B2**
(45) Date of publication and mention of the opposition decision: **20.09.2017**
(45) Mention of the grant of the patent: 11.09.2013
(21) Application number: 09790966.7
(22) Date of filing: 30.07.2009
(51) Int. Cl.: B32B 27/40, B32B 27/04, D06N 3/14

(54) **FILMS AND ARTICLES MADE WITH THERMOPLASTIC BLOCK COPOLYMERS**
THERMOPLASTISCHE BLOCKCOPOLYMERE ENTHALTENDE FILME UND ARTIKEL
FILMS ET ARTICLES FAITS AVEC DES COPOLYMÈRES À BLOCS THERMOPLASTIQUES

(30) Priority: 06.08.2008 US 86571 P
(43) Date of publication of application: 27.04.2011
(73) Proprietor: Lubrizol Advanced Materials, Inc., Cleveland, OH 44141-3247 (US)
(72) Inventor: MELTZER, Donald A., Akron Ohio 44333 (US); WIESSNER, Robert J., NL-5531XG Bladel (NL); FARKAS, Julius, North Ridgeville Ohio 44039 (US)
(74) Representative: dompatent von Kreisler Selting Werner - Partnerschaft von Patent- und Rechtsanwälten mbB
(86) International application number: PCT/US2009/052178
(87) International publication number: WO 2010/017082

(56) References cited:
- WO-A-2005/123798
- WO-A-2008/036796
- WO-A-2008/089167
- GB-A- 821 368
- US-A- 3 486 925

## Description

### FIELD OF THE INVENTION

The present invention relates to pipe liners that are manufactured utilizing a soft, hydrophobic thermoplastic block copolymer (TBC) having a melting point which is within the range of about 80°C to about 250°C and which is preferable within the range of about 80°C to about 175°C. This TBC offers a unique array of characteristics that are highly desirable for utilization in manufacturing products of these types.

### BACKGROUND OF THE INVENTION

TPU (thermoplastic polyurethane) polymers are typically made by reacting (1) a hydroxyl terminated polyether or hydroxyl tenninated polyester, (2) a chain extender, and (3) an isocyanate compound. Various types of compounds for each of the three reactants are disclosed in the literature. The TPU polymers made from these three reactants find use in various fields where products are made by melt processing the TPU and forming it into various shapes to produce desired articles by processes such as extrusion and molding. Important uses for TPU include manufacturing shoe soles, hoses, cable jacketing, coated fabrics such as conveyor belts, sewer liners and printing blankets, protective coatings, adhesives, and melt spun elastic fibers.

TPUs are segmented polymers having soft segments and hard segments. This feature accounts for their excellent elastic properties. The soft segments are derived from the hydroxyl terminated polyether or polyester and the hard segments are derived from the isocyanate and the chain extender. The chain extender is typically one of a variety of glycols, such as 1,4-butane glycol.

United States Patent 5,959,059 discloses a TPU made from a hydroxyl terminated polyether, a glycol chain extender, and a diisocyanate, This TPU is described as being useful for making fibers, golf ball cores, recreational wheels, and other uses.

In numerous applications, it would be desirable for the TBC to exhibit high tensile strength and a high elongation at break coupled with a melting point of less than about 175°C. In many of these applications, it would also be desirable for the TBC to be hydrophobic, to be thermally or oxidatively stable, to be capable of being swollen by oil, such as mineral oils, and to exhibit low tensile set.

### SUMMARY OF THE INVENTION

The present invention is directed to the cured in place liner for a passageway or pipe as set forth in the claims.

The soft, hydrophobic thermoplastic block copolymer (TBC) disclosed offers a unique array of chemical and physical characteristics that makes it highly desirable for use in manufacturing printing blankets, pipe liners, conveyor belts (for food handling, airport baggage handling, pharmaceutical product handling, and the like), inflatable products (including air mattresses, boats, escape slides, floating devices, life rafts, lifting devices, oil booms, safety platforms, and weather balloons), collapsible containers (for vegetable oils, fuels, lubricating oils, heating oils, hydraulic fluids, industrial sewage, water, wine, and other beverages), protective cloth (for body bags, tents, equipment covers, seam sealing cloth, surgical drapes, and wet suits) and a variety of coated fabric products, including automotive interior trim, decorative cloth, grape press membranes, hot air balloons, labels and stickers, respiration devices, and seals.

The TBCs used in accordance with this invention is semicrystalline and can be a polyurethane (TPU), a copolyester (COPE), a copolyamides (COPA), or a polyurethaneurea (TPUU). TBCs utilized in the practice of this invention exhibit a high tensile strength, a high elongation at break, a melting point of less than about 250°C, and a glass transition temperature of less than about 0°C. The TBC employed in the practice of this invention is also hydrophobic, has a density of less than 1.1, and offers low tensile set. In some cases, it is preferable for the TBC employed in the practice of this invention to have a density of less than 1.0 or even less than 0.95. For instance, it is important for the TBC to be of a low density in applications where it is used in manufacturing coated fabrics for hot air balloons, ultra-light aircraft wings, and floatation devices, such as safety vests for aircraft and watercraft. The TBC is also good for use in such applications because it is hydrophobic in nature and can withstand continuous use at elevated temperatures or at high humidity levels.

### DETAILED DESCRIPTION OF THE INVENTION

The articles of this invention are manufactured utilizing a TBC that can be a polyurethane (TPU), a copolyester (COPE), a copolyamides (COPA), or a polyurethaneurea (TPUU). The thermoplastic polyurethane (TPU) that can be used in the practice of this invention is comprised of the reaction product of (1) a hydrophobic polyol, (2) a polyisocyanate, and (3) a chain extender containing 2 to 20 carbon atoms, wherein the hydrophobic polyol has a number average molecular weight which is within the range of about 1,000 to about 4.000 Daltons; wherein the TPU has a weight average molecular weight which is within the range of 50,000 to 1,000,000 Daltons and a melting point which is within the range of 80°C to 250°C. The number average molecular weight (Mn) is determined by assay of terminal functional groups.

The COPA polymers that can be used in the practice of this invention can be the reaction product of a dicarboxylic polyamide with a hydrophobic polyol. These block copolymers have repeat units of the structural formula: 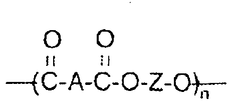 wherein A represents a polyamide sequence and Z represents that part of the polymer derived from a linear or branched hydrophobic polyol. COPA polymers of this type and techniques for their synthesis are described in greater detail in United States Patent 4,220,838 and United States Patent 4,332,920. The teachings of United States Patent 4,220,838 and United States Patent 4,332,920 are incorporated herein by reference for the purpose of illustrating COPA polymers that can be used in the practice of this invention and techniques for their synthesis. COPA polymers that are made by reacting a lactam, a polyol, and a polyacyl lactam are described by United States Patent 4,223,112.

The thermoplastic polyurethaneurea (TPUU) polymers used in the practice of this invention is comprised of the reaction product of (1) a hydrophobic polyamine, (2) a polyisocyanate, and (3) a chain extender containing 2 to 20 carbon atoms; wherein the hydrophobic polyamine has a number average molecular weight which is within the range of about 1,000 to about 4,000 Daltons; wherein the TPUU has a weight average molecular weight which is within the range of 50,000 to 1,000,000 Daltons and a melting point which is within the range of 80°C to 250°C. The thermoplastic copolyester (COPE) polymers utilized in the practice of this invention is comprised of the reaction product of (1) a hydrophobic polyol, (2) an aromatic diacid, and (3) a chain extender containing 2 to 20 carbon atoms; wherein the hydrophobic polyol has a number average molecular weight which is within the range of about 1,000 to about 4,000 Daltons; wherein the COPE has a weight average molecular weight which is within the range of 50,000 to 1,000,000 Daltons and a melting point which is within the range of 80°C to 250°C.

The TBC utilized in manufacturing the products of this invention is typically the reaction product of (1) a hydrophobic polyol, (2) polyisocyanate or an aromatic dicarboxylic acid, and (3) a linear chain extender containing 2 to 20 carbon atoms. The technique under which these reactants are polymerized to synthesize the thermoplastic polymer is conducted utilizing conventional equipment, catalysts, and procedures. However, the polymerization is conducted in a manner that will result in attaining a weight average molecular weight which is within the range of about 50,000 to about 500,000 Daltons. It is also, of course, conducted utilizing a hydrophobic polyol and a chain extender containing 2 to 20 carbon atoms, except for COPA in which case the hydrophobic polyol is rcacted with the carboxyl terminated telechelic polyamide sequence. The chain extender will typically be a linear chain extender that contain from 2 to 12 carbon atoms.

The hydrophobic polyol used in synthesizing the TBCs used in the practice of this invention, such as TPUs, is a diol of a conjugated diolefin monomer, a poly(isobutylene) diol, a polyester polyol of dimer acids containing 26 to 44 carbon atoms. For instance, diols of conjugated olefin monomers that can be used include hydrogenated poly(butadiene) diols, and hydrogenated poly(isoprene) diols. Hydrogenated poly(butadiene) polyols are sold by Mitsubishi Chemical Corporation under the trade name POLYTAIL and Kraton polyols sold by Kraton Polymers of Houston, Texas.

Dimer fatty acids (and esters thereof) are a well known commercially available class of dicarboxylic acids (or esters). They are normally prepared by dimerising unsaturated long chain aliphatic monocarboxylic acids, usually of 13 to 22 carbon atoms, or their esters (alkyl esters). The dimer acid material will contain 26 to 44 carbon atoms. Particularly, examples include dimer acids (or esters) derived from C₁₈ and C₂₂ unsaturated monocarboxylic acids (or esters) which will yield, respectively, C₃₆ and C₄₄ dimer acids (or esters). Dimer acids derived from C₁₈ unsaturated acids, which include acids such as linoleic and linolenic are particularly well known (yielding C₃₆ dimer acids). For example, DELTA 9,11 and DELTA 9, 12 linoleic acids can dimerise to a cyclic unsaturated structure (although this is only one possible stricture; other structures, including acyclic structures are also possible).

The dimer acid products will formally also contain proportions of trimer acids (C₅₄ acids when using C₁₈ starting acids), possibly even higher oligomers and also small amounts of the monomer acids. Several different grades of dimer acids are available from commercial sources and these differ from each other primarily in the amount of monobasic and trimer acid fractions and the degree of unsaturation. Priplast™ polyester polyols are branched C₃₆ dimerized fatty acids which are particularly useful as the hydrophobic polyol in the practice of this invention. Priplast™ polyester polyols are commercially available from Croda Uniqema Inc. of Gouda, The Netherlands. The hydrophobic polyol used in synthesizing the TPU of this invention will typically have a number average molecular weight which is within the range of about 1,500 to about 4,000 Daltons and will preferably have a number average molecular weight which is within the range of about 2,000 to about 3,000 Daltons.

The hydrophobic polyamines used in synthesizing TPUU and COPA polymers that can be employed in the practice of this invention are typically straight chained or branched diamines of the structural formula: H₂N-(CₘH₂ₘ)-NH₂, wherein m is an integer that represents the number of carbon atoms in the hydrophobic polyamine. These hydrophobic polyols can be a diamine terminated ethylene-propylene copolymer rubber, a diamine terminated hydrogenated diene rubber, such as hydrogenated polyisoprene or hydrogenated polybutadiene, or the like.

The chain extender that can be used in synthesizing the TBC include organic diols or glycols having from 2 to about 20 carbon atoms, such as alkane diols (straight chained and branched), cycloaliphatic diols, alkylaryl diols, and the like. Alkane diols which have a total from about 2 to about 12 carbon atoms are often utilized. Some representative examples of alkane diols that can be used include ethanediol, propane glycol, 1,6-hexanediol, 1,3-butanediol (1,3-BDO), 1,5-pentanediol, neopentylglycol (NPG), 2-butyl-2-ethyl-1,3-propanediol, 2,4-diethyl-1,5-pentanediol, 3-methyl-1,5-pentanediol, and 1,4-butanediol. Dialkylene ether glycols, such as diethylene glycol and dipropylene glycol, can also be used as the chain extender. Examples of suitable cycloaliphatic diols include 1,2-cyclopentanediol, 1,4-cyclohexanedimethanol (CHDM) and the like. Example of suitable alkylaryl diols include hydroquinone di (β-hydroxyethyl) ether (HQEE), 1,4-benzenedimethanol, bis (hydroxy ethoxy) biphenol, bisphenol A ethoxylates, bisphenol F ethoxylates and the like. Still, other suitable chain extenders are 1.3-di(2-hydroxyethyl)benzene, and 1,2-d(2-hydroxyethoxy)benzene. Mixtures of the above noted chain extenders can also be utilized.

Chain extenders with a functionality of greater than 2 may also be used with the proviso that the resulting polymer retains its thermoplastic nature and other desired chemical and physical characteristics. Examples of such multifunctional chain extenders include trimethylolpropane, glycerin, and pentraerythritol. Normally, multifunctional chain extenders are used in conjunction with difunctional chain extenders to limit the degree of resulting chain branching. Accordingly, the level of multifunctional chain extenders typically does not exceed 10 mole percent of the total amount of chain extenders used in making the thermoplastic polymer. In other words, difunctional chain extenders will typically represent at least about 90 mole percent of the total amount of chain extenders used in synthesizing the polymer.

The linear chain extender are typically preferred for used in making the TBCs of this invention will typically be of the structural formula: 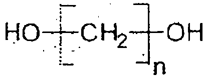 wherein n represents an integer from 2 to 20 and wherein n typically represents an integer from 2 to 12. Accordingly, the linear chain extender will typically be selected from the group consisting of ethylene glycol, 1,3-propane diol, 1,4-butane diol, 1,5-pentane diol, 1,6-hexanediol, 1,7-heptane diol, 1,8-octane diol, 1,9-nonane diol, 1,10-decane diol, 1,11-undecane diol, and 1,12-dodecane diol. The most preferred chain extender is 1,12-dodecane diol with it being preferred for the chain extender to consist entirely of 1,12-dodecane diol. However, it should be appreciated that various mixtures of diols can be utilized as the chain extender in the practice of this invention. To attain higher melting points linear chain extenders having lower molecular weights (fewer carbon atoms) will typically be utilized. For instance, ethylene glycol can be used in synthesizing thermoplastic polymers having relatively high melting points. On the other hand, linear chain extenders of higher molecular weights will typically be utilized in making thermoplastic polymers having lower melting points. For instance, 1,12-dodecane diol can be employed in synthesizing thermoplastic polymers having relatively low melting points.

The polyisocyanate used in synthesizing the thermoplastic polymer is preferably a diisocyanate. White aliphatic diisocyanates can be utilized, aromatic diisocyanates are highly preferred. Moreover, the use of multifunctional isocyanate compounds, i.e., triisocyanates, etc., which cause crosslinking, are generally avoided and thus the amount used, if any, is generally less than 4 mole percent and preferably less than 2 mole percent based upon the total moles of all of the various isocyanates used. Suitable diisocyanates include aromatic diisocyanate such as: 4,4'-methylene bis-(phenyl isocyanate) (MDI); m-xylene diisocyanate (XDI), phenylene-1-4-diisocyanate, naphthalene-1,5-diisocyanate, diphenylmethane-3,3'-dimethoxy-4,4'-diisocyanate, and toluene diisocyanate (TDI); as well as aliphatic diisocyanates such as isophorone diisocyanate (IPDI), 1,4-cyclohexyl diisocyanate (CHDI), decane-1,10-diisocyanate, and dicyclohexylmethane-4,4'-diisocyanate. Dimers and trimers of the above diisocyanates may also be used as well as a blend of two or more diisocyanates may be used.

The polyisocyanate used in this invention may be in the form of a low molecular weight polymer or oligomer which is end capped with an isocyanate. For example, the hydroxyl terminated hydrophobic polyol described above may be reacted with an isocyanate-containing compound to create a low molecular weight polymer end capped with isocyanate. In the TPU art, such materials are normally referred to as prepolymers. Such pre-polymers normally have a number average molecular weight (Mn) which is within the range of about 500 to about 10,000 Daltons.

The mole ratio of the one or more diisocyanates is generally from about 0.95 to about 1.05, and preferably from about 0.98 to about 1.03 moles per mole of the total moles of the one or more hydrophobic polyols and the one or more chain extenders. The molar ratio of the chain extender to the polyol will typically be within the range of about 0.3:1 to 5:1 and will more typically be within the range of about 0.4:1 to 4:1. The molar ratio of the chain extender to the polyol will preferably be within the range of about 0.5:1 to 3:1 and will more preferably be within the range of about 0.5:1 to 2:1.

A wide variety of aromatic dicarboxylic acids can be utilized in synthesizing the TBCs used in accordance with this invention. The aromatic dicarboxylic acid will typically contain from 8 to 16 carbon atoms. Some representative examples of aromatic dicarboxylic acids that can be used include terephthalic acid, isophthalic acid, orthophthalic acid, 1,8-naphthalenedicarboxylic acid, 1,7-naphthalenedicarboxylic acid, 1,6-naphthalenedicarboxylic acid, 1,5-naphthalenedicarboxylic acid, 2,6-naphthalenedicarboxylic acid, 2,7-naphthalenedicarboxylic acid, 1,7-anthracenedicarboxylic acid, 2,6-anthracenedicarboxylic acid, 2,7-anthracenedicarboxylic acid, 2,6-phenalenedicarboxylic acid, 1,6-phenalenedicarboxylic acid, 1,7-phenalenedicarboxylic acid, 2,8-naphthacenedicarboxylic acid, 2,9-naphthacenedicarboxylic acid, 1,7-naphthacenedicarboxylic acid, 1,10-naphthacenedicarboxylic acid, 2,7-pyenedicarboxylic acid, 2,6-pyrenedicarboxylic acid, and 2,8-pyrenedicarboxylic acid. The preferred aromatic dicarboxylic acids include terephthalic acid, isophthalic acid, and 2,6-naphthalenedicarboxylic acid with terephthalic acid typically being the most preferred.

The TBC used in manufacturing the products of this invention can be a polyurethane, a copolyester, a copolyamide or a polyurethaneurea. However, TPUs are typically used as the TBC. TBCs, such as TPUs, that are useful in making the articles of this invention can be synthesized utilizing the same techniques and equipment as are used in making conventional TPUs. For instance, in synthesizing TPU that are suitable for use in the practice of this invention; the hydrophobic polyol, the diisocyanate, and the chain extender are generally added together and reacted in accordance with any conventional urethane reaction method. Preferably, the TPU forming components of the present invention are melt polymerized in a suitable mixer, such as an internal mixer (a Banbury mixer), or preferably an extruder. In the preferred process, the hydrophobic polyol is blended with the glycol chain extender and added to the extruder as a blend. The diisocyanate is added separately to the extruder. Suitable processing or polymerization starting temperatures of the diisocyanate is from about 100°C to about 200°C, and preferably from about 100°C to about 100°C. Suitable processing or polymerization starting temperature of the blend of the hydrophobic polyol and the aromatic chain extender is from about 100°C to about 220°C, and preferably from about 150°C to 200°C. Suitable mixing times in order to enable the various components to react and form the TPU polymers of the present invention arc generally from about 2 to about 10 minutes, and preferably from about 3 to about 5 minutes.

The preferred process to produce the TPU is the process referred to as the one-shot polymerization process. In the one-shot polymerization process which generally occurs in situ, a simultaneous reaction occurs between three components, that is the one or more hydrophobic polyol, the chain extender, and the diisocyanate. The reaction is generally initiated at a temperature of from about 90°C to about 200°C. In as much as the reaction is exothermic, the reaction temperature generally increases to about 220°C to 250°C. The TPU polymer will exit the reaction extruder and will typically be pelletized. The pellets of TPU are normally stored in a heated vessel to continue the reaction and to dry the TPU pellets.

It is often desirable to utilize catalysts such as stannous and other metal carboxylates as well as tertiary amines. Examples of metal carboxylates catalysts include stannous octoate, dibutyl tin dilaurate, phenyl mercuric propionate, lead octoate, iron acetylacetonate, magnesium acetylacetonate, and the like. Examples of tertiary amine catalysts include triethylene diamine, and the like. The amount of the one or more catalysts is low, generally from about 50 to about 100 parts by weight per million parts by weight of the end TPU polymer formed.

The weight average molecular weight (Mw) of the TPU polymer used in the practice of this invention will typically be in the range of about 50,000 to about 500,000 Daltons, preferably from about 100,000 to about 500,000 Daltons, and more preferably from about 120,000 to about 300,000 Daltons. The Mw of the TPU polymer is measured according to gel permeation chromatography (GPC) against polystyrene standard.

When a higher molecular weight TPU polymer is desired, it can be achieved by using a small amount of a cross linking agent having an average functionality greater than 2.0 to induce cross linking. The amount of cross linking agent used is preferably less than 2 mole percent of the total moles of chain extender, and more preferably less than 1 mole percent. A particularly desirable method to increase the molecular weight in the preferred TPU polymer is to replace less than 1 mole percent of the chain extender with trimethylol propane (TMP).

The cross linking is accomplished by adding a cross linking agent having an average functionality greater than 2.0 together with the hydrophobic polyol, the isocyanate compound, and chain extender in the reaction mixture to manufacture the TPU polymer. The amount of cross linking agent used in the reaction mixture to make the TPU polymer will depend on the desired molecular weight and the effectiveness of the particular cross linking agent used. Usually, less than 2.0 mole percent, and preferably less than 1.0 mole percent, based on the total moles of chain extender used in making the TPU polymer are used. Levels of cross linking agent greater than 2.0 mole percent, based on the total moles of chain extender would be difficult to melt process. Therefore, the level of cross linking agent used is from about 0.05 mole percent to about 2.0 mole percent based on the total moles of chain extender.

The cross linking agents can be any monomeric or oligomeric materials which have an average functionality of greater than 2.0 and have the ability to cross link the TPU polymer. Such materials are well known in the art of thermoset polymers. Preferred cross linking agents include trimethylol propane (TMP) and pentaerythritol. Trimethylol propane has been found to particularly be a desirable cross linking agent.

The TPU polymers used in accordance with this invention can be mixed with various conventional additives or compounding agents, such as fillers, antioxidants, extenders, pigments, colorants, lubricants, UV absorbers, plasticizers, processing oils, waxes, and the like. Fillers that can be used include talc, silicates, clays, calcium carbonate, and the like. The level of conventional additives will depend on the final properties and cost of the desired end-use application, as is well known to those skilled in the art of compounding TPUs. The additives may be added during the reaction to form the TPU, but are normally added in a second compounding step.

The TPU polymer used in the practice of this invention has a melting point which is within the range of about 80°C to about 250°C. It will typically have a melting point which is within the range of about 90°C to about 180°C, and will more typically have a melting point which is within the range of about 110°C: to about 170°C. The melting point of the TPU polymer can be measured according to ASTM D-3417-99 using a differential scanning calorimeter (DSC). However, in the case of very soft polymers the Kofler method can be used to measure the melting point of the TPU.

The TPUs used in manufacturing the articles of this invention offers excellent resistance against compression set and tensile set. For instance, this TPU typically offers a tensile set at 200% strain of less than 20%, preferably less than 15%, and most preferably less than 10% when tested at 23°C in accordance with ASTM D412. They also offer high tensile strengths of over 1000 psi (6.9 x 10⁶ Pascals) and elongations to break of greater than 500% as measured according to ASTM D412 at 23°C. The TPU will also preferable have a tensile strength of greater than 1500 psi (1.0 x 10 Pascals) and will most preferably exhibit a tensile strength of greater than 2000 psi (1.4 x 10⁷ Pascals).

### Cured in Place Liner

The "cure in place" method of lining damaged or broken pipes, such as sewers, water pipes, and gas pipes, come into wide spread commercial use for repairing underground pipes. This method avoids the need to excavate the underground pipe and the resulting damage to surface infrastructure, such as paved streets and buildings. The cured in place method involves first positioning the liner inside the pipe while the liner is in a flexible state. Then the liner is cured into a hard state within the pipe while being forced against the inside wall of the damaged pipe. This method typically utilizes pressurized air or water to force the flexible liner to conform to the inner surface of the pipe until it is cured into a hard state.

Such pipe liners typically have fabric on one side and a polymer sheet on the other side. The fabric is saturated with an uncured thermoset material. The curing, that is the process of converting the thermoset material to a rigid state, is performed after the liner has been placed inside the pipe. The liner can be placed in the pipe to be repaired by either the "dragged-in" method as described in United States Paten 4,009,063 or the "inversion" method as described in United States Patent4,064,211. In any case, the polymer sheet placed on the fabric must be resistant to the (uncured) thermoset material and should also be able to withstand the heat used in curing the thermoset material.

The pipe liners of this invention have a layer of resin absorbent material, such as non-woven fabric, which is capable of accepting a thermoset resin, such as an epoxy resin. The liners of this invention also have a layer of the TBC attached to one surface of the layer of resin absorbent material. The TBC has sufficient heat resistance to be able to withstand the epoxy resin/amine curative exotherm as well as the steam temperature used in installation of the liner. The TBC can also withstand the high temperature without forming holes in the liner which is referred to in the art as "blow through". The TBC can also withstand hot water in cases where it is used in the installation of the liner.

A resin absorbent material is used as one layer of the liner. The resin absorbent material can be any material which absorbs the thermoset resin. The resin absorbent layer can be from 0.1 cm to 20 cm thick, preferably 0.2 cm to 15 cm thick, and most preferably 0.3 to 10 cm thick. Suitable resin absorbent materials include fibrous materials of organic or inorganic fiber which may be woven or non-woven fibers. Preferably, the resin absorbent material is a needle punched non-woven material, such as polyester non-woven mat when lining sewers (main or lateral). For lining gas pipes, a glass fiber material is typically referred.

The TBC is coated onto one side of the resin absorbent material. Melt processing equipment is used to coat the TBC onto the resin absorbent materials. Suitable melt processing equipment includes calendar and extrusion processes. The preferred thickness of the TBC coating layer on the liner is from about 100 to about 1000 microns, preferably from about 200 to about 800 microns, and more preferably from about 300 microns to about 500 microns. The TBC coating layer bonds very well to the polyester non-woven mat, thus the polyester non-woven mat is preferred for utilisation in the practice of this invention.

In making the liner of this invention, the TBC is melt coated or extrusion coated onto the resin absorbent material. A resin capable of being made into a thermoset resin, such as vinyl ester resin, polyester resin, or epoxy resin is added to the resin absorbent material. If any epoxy resin is used, an amine curing agent is added to the epoxy resin to cure it into a thermoset material. At this stage (before curing), the liner is flexible and can be placed inside the cavity of a passageway or pipe. The flexible liner can be inserted by either the drag-in method or the inversion method. Once inside

## Claims

1. A cured in place liner for a passageway or pipe comprising: (a) a resin absorbent material layer; (b) a thermoset resin absorbed into said resin absorbent material layer; and (c) a thermoplastic block copolymer (TBC) coating layer on at least one side of said resin absorbent material layer; wherein the TBC is comprised of (I) the reaction product of (1) a hydrophobic polyol or polyamine, (2) a polyisocyanate or an aromatic dicarboxylic acid, and (3) a linear chain extender containing 2 to 20 carbon atoms, or (II) the reaction product of (1) a hydrophobic polyol or polyamine, and (2) a carboxyl terminated telechelic polyamide sequence; wherein the hydrophobic polyol or polyamine has a number average molecular weight which is within the range of 1,000 to 4,000 Daltons; wherein the hydrophobic polyol is selected from a diol of a conjugated diolefin monomer, a poly(isobutylene) diol, and polyester polyols of dimer acids containing 26 to 44 carbon atoms; wherein the TBC has a weight average molecular weight which is within the range of 50,000 to 1,000,000 Daltons; and wherein the TBC has a melting point which is within the range of 80°C to 250°C.

2. A cured in place liner for a passageway or pipe as specified in claim 1, wherein the resin absorbent material is a needle punched non-woven fabric.

3. A cured in place liner for a passageway or pipe as specified in claim 2, wherein the needle punched non-woven fabric is a polyester fabric.

4. The cured in place liner as specified in claim 1, wherein said coating layer comprises an alloy of the TBC with a material selected from the group consisting of nitrile rubber, EPDM rubber, isoprene rubber, styrene-butadiene rubber, butadiene rubber, chloroprene rubber, a styrene-isoprene-styrene triblock polymer, a styrene-butadiene-styrene triblock polymer, a styrene-isoprene diblock polymer, a styrene-butadiene diblock polymer and butyl rubber.

5. The cured in place liner of claim 1, wherein the polyisocyanate is an aromatic diisocyanate.

6. The cured in place liner of claim 5, wherein the aromatic diisocyanate is selected from the group consisting of 4,4'-methylene bis-(phenyl isocyanate), m-xylene diisocyanate, phenylene-1,4-diisocyanate, naphthalene-1,5-diisocyanate, diphenylmethane-3,3'-dimethoxy-4,4'-diisocyanate, and toluene diisocyanate.

## Patentansprüche

1. In situ gehärtete Auskleidung (Schlauchliner) für einen Durchgang oder ein Rohr, umfassend (a) eine Schicht aus einem harzaufsaugenden Material; (b) ein duroplastisches Harz, das in die Schicht aus dem harzaufsaugenden Material aufgesaugt ist; und (c) eine Beschichtungsschicht aus einem thermoplastischen Blockcopolymer (TBC) auf wenigstens einer Seite der Schicht aus dem harzaufsaugenden Material; wobei das TBC aus (I) dem Reaktionsprodukt von (1) einem hydrophoben Polyol oder Polyamin, (2) einem Polyisocyanat oder einer aromatischen Dicarbonsäure und (3) einem linearen Kettenverlängerer, der 2 bis 20 Kohlenstoffatome enthält, oder (II) dem Reaktionsprodukt von (1) einem hydrophoben Polyol oder Polyamin und (2) einer carboxyterminierten telechelen Polyamidsequenz besteht, wobei das hydrophobe Polyol oder Polyamin ein Zahlenmittel des Molekulargewichts aufweist, das im Bereich von 1000 bis 4000 Dalton liegt, wobei das hydrophobe Polyol aus einem Diol eines konjugierten Diolefinmonomers, einem Poly(isobutylen)diol und Polyesterpolyolen von Dimersäuren, die 26 bis 44 Kohlenstoffatome enthalten, ausgewählt ist, wobei das TBC ein Gewichtsmittel des Molekulargewichts aufweist, das im Bereich von 50 000 bis 1 000 000 Dalton liegt, und wobei das TBC einen Schmelzpunkt aufweist, der im Bereich von 80 °C bis 250 °C liegt.

2. Schlauchliner für einen Durchgang oder ein Rohr gemäß Anspruch 1, wobei das harzaufsaugende Material ein Nadelvlies ist.

3. Schlauchliner für einen Durchgang oder ein Rohr gemäß Anspruch 2, wobei das Nadelvlies ein Polyestertextilstoff ist.

4. Schlauchliner gemäß Anspruch 1, wobei die Beschichtungsschicht eine Legierung des TBC mit einem Material umfasst, das aus der Gruppe ausgewählt ist, die aus Nitrilkautschuk, EPDM-Kautschuk, Isoprenkautschuk, Styrol-Butadien-Kautschuk, Butadienkautschuk, Chloroprenkautschuk, einem Styrol-Isopren-Styrol-Triblockpolymer, einem Styrol-Butadien-Styrol-Triblockpolymer, einem Styrol-Isopren-Diblockpolymer, einem Styrol-Butadien-Diblockpolymer und Butylkautschuk besteht.

5. Schlauchliner gemäß Anspruch 1, wobei das Polyisocyanat ein aromatisches Diisocyanat ist.

6. Schlauchliner gemäß Anspruch 5, wobei das aromatische Diisocyanat aus der Gruppe ausgewählt ist, die aus 4,4'-Methylenbis(phenylisocyanat), m-Xyloldiisocyanat, Phenylen-1,4-diisocyanat, Naphthalin-1,5-diisocyanat, Diphenylmethan-3,3'-dimethoxy-4,4'-diisocyanat und Toluoldiisocyanat besteht.

## Revendications

1. Revêtement durci en place pour un passage ou un tuyau comprenant : (a) une couche de matériau absorbant la résine ; (b) une résine thermodurcissable absorbée dans ladite couche de matériau absorbant la résine ; et (c) une couche de revêtement de copolymère séquencé thermoplastique (TBC) sur au moins un côté de ladite couche de matériau absorbant la résine ; dans lequel le TBC est constitué (I) du produit réactionnel de (1) un polyol ou une polyamine hydrophobe, (2) d'un polyisocyanate ou d'un acide dicarboxylique aromatique, et (3) d'un extendeur de chaîne linéaire contenant 2 à 20 atomes de carbone, ou (II) du produit réactionnel de (1) un polyol ou une polyamine hydrophobe, et (2) d'une séquence polyamide télichélique à terminaison carboxyle ; dans lequel le polyol ou la polyamine hydrophobe présente une masse moléculaire moyenne en nombre qui se situe dans la plage de 1 000 à 4 000 Daltons ; dans lequel le polyol hydrophobe est sélectionné à partir d'un diol d'un monomère dioléfine conjugué, d'un poly(isobutylène) diol, et de polyols polyesteriques d'acides dimères contenant 26 à 44 atomes de carbone ; dans lequel le TBC présente une masse moléculaire moyenne en poids qui se situe dans la plage de 50 000 à 1 000 000 Daltons ; et dans lequel le TBC présente un point de fusion qui se situe dans la plage de 80 °C à 250 °C.

2. Revêtement durci en place pour un passage ou un tuyau comme spécifié dans la revendication 1, dans lequel le matériau absorbant la résine est un non-tissé aiguilleté.

3. Revêtement durci en place pour un passage ou un tuyau comme spécifié dans la revendication 2, dans lequel le non-tissé aiguilleté est un tissu polyester.

4. Revêtement durci en place comme spécifié dans la revendication 1, dans lequel ladite couche de revêtement comprend un alliage du TBC avec un matériau sélectionné dans le groupe composé de caoutchouc nitrile, caoutchouc EPDM, caoutchouc isoprène, caoutchouc styrène-butadiène, caoutchouc butadiène, caoutchouc chloroprène, polymère tribloc styrène-isoprène-styrène, polymère tribloc styrène-butadiène-styrène, polymère dibloc styrène-isoprène, polymère dibloc styrène-butadiène et caoutchouc butylique.

5. Revêtement durci en place selon la revendication 1, dans lequel le polyisocyanate est une diisocyanate aromatique.

6. Revêtement durci en place selon la revendication 5, dans lequel le diisocyanate aromatique est sélectionné dans le groupe comprenant le 4,4'-méthylène bis-(phényl isocyanate), le m-xylène diisocyanate, le phénylène-1,4-diisocyanate, le naphtalène-1,5-diisocyanate, le diphénylméthane-3,3'-diméthoxy-4,4'-diisocyanate et le diisocyanate de toluène.
